(19) Europäisches Patentamt / European Patent Office / Office européen des brevets

(11) **EP 3 239 557 A1**

(12) **EUROPEAN PATENT APPLICATION**
published in accordance with Art. 153(4) EPC

(43) Date of publication:
**01.11.2017 Bulletin 2017/44**

(21) Application number: **14908902.1**

(22) Date of filing: **22.12.2014**

(51) Int Cl.:
*F16F 15/02* (2006.01)     *E04H 9/02* (2006.01)

(86) International application number:
**PCT/JP2014/006375**

(87) International publication number:
**WO 2016/103291 (30.06.2016 Gazette 2016/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Oiles Corporation**
**Tokyo 108-0075 (JP)**

(72) Inventors:
• **SHIMODA, Ikuo**
 **Tokyo 108-0075 (JP)**
• **SUZUKI, Kiyoharu**
 **Ashikaga-shi**
 **Tochigi 326-0327 (JP)**

(74) Representative: **J A Kemp**
 **14 South Square**
 **Gray's Inn**
 **London WC1R 5JJ (GB)**

(54) **SEISMIC ISOLATION SUPPORT DEVICE**

(57)     A base isolation supporting device 1 includes a support 8 which is adapted to be affixed to an outer casing 4 of a fixture 3 to be supported on a floor 2, so as to receive the load, acting in a vertical direction V, of the fixture 3, and which has a cross-sectionally circular arc-shaped convex outer surface 7; and a rotating body 13 which, at a cross-sectionally circular arc-shaped outer surface 9 thereof, is adapted to be brought into contact with the cross-sectionally circular arc-shaped convex outer surface 7 of the support 8 slidably and rotatably in an R direction about a center O1, while, at a cross-sectionally circular arc-shaped convex outer surface 11 thereof, coming into contact with a flat surface 10 of the floor 2 rollably about the center O1, so as to receive together with the support 8 the load, acting in the vertical direction V, of the fixture 3 via the support 8.

FIG. 1

**Description**

TECHNICAL FIELD

The present invention relates to a base isolation supporting device of an eccentric rolling pendulum type.

BACKGROUND ART

A sliding base isolation supporting device using a sliding plate or a sliding surface, a rolling base isolation supporting device using a rolling member, or the like is used to support a fixture such as a display rack, a bookshelf, or the like in a base-isolated manner.

PRIOR ART DOCUMENTS

PATENT DOCUMENTS

Patent Document 1:    JP-A-7-310459

SUMMARY OF THE INVENTION

PROBLEMS THAT THE INVENTION IS TO SOLVE

Incidentally, the sliding base isolation supporting device and the rolling base isolation supporting device do not possess a restoring force, so that, after the tremor, a returning operation is required for returning the fixture, the bookshelf, or the like to its original position by pushing it manually.

A base isolation device of a pendulum type disclosed in, for example, Patent document 1 has been proposed to perform the returning operation which is troublesome and requires a force. In this proposed base isolation device, a peripheral portion around a concave central portion is formed with a gentler curvature than the curved surface of a lower surface of a rotating body, and the period of the base isolation device is determined by the radius of curvature of the curved surface of this lower surface.

However, with the pendulum-type base isolation device disclosed in Patent Document 1, since a supporting base having a concave portion is required, a building floor or the like where a fixture such as a display rack, a bookshelf, or the like is installed is difficult to be directly used for the base isolation device, and a large supporting base is required to attain a long period of the pendulum-type base isolation device so as to cope with long-period earthquakes, with the result that objects to be installed are limited.

The present invention has been devised in view of the above-described aspects, and its object is to provide a base isolation supporting device which can be installed by using as it is the building floor or the like where a base isolation support object, including a fixture such as a display rack, a bookshelf, or the like, is installed, and which is capable of easily attaining a long period thereof.

MEANS FOR SOLVING THE PROBLEMS

A base isolation supporting device in accordance with the present invention comprises: a support which is adapted to be affixed to one of a foundation or a base and a base isolation support object so as to receive a load of the base isolation support object to be supported on the foundation or the base, and which has a cross-sectionally circular arc-shaped outer surface; and a rotating body which has a cross-sectionally circular arc-shaped outer surface with a shape complementary to the cross-sectionally circular arc-shaped outer surface of the support, and which, at the cross-sectionally circular arc-shaped outer surface with the shape complementary to the cross-sectionally circular arc-shaped outer surface of the support, is adapted to be brought into slidable contact with the cross-sectionally circular arc-shaped outer surface of the support, while, at a cross-sectionally circular arc-shaped convex outer surface thereof, coming into rollable contact with a flat surface of another one of the foundation or the base and the base isolation support object, so as to receive the load of the base isolation support object together with the support, wherein the cross-sectionally circular arc-shaped convex outer surface of the rotating body has a greater radius of curvature than a radius of curvature of the cross-sectionally circular arc-shaped outer surface of the rotating body, and, in a stationary state, a center of curvature of the cross-sectionally circular arc-shaped convex outer surface of the rotating body is positioned eccentrically with respect to a center of curvature of the cross-sectionally circular arc-shaped outer surface of the rotating body toward a side of one of the foundation or the base and the base isolation support object in a vertical direction.

According to the base isolation supporting device in accordance with the present invention, since the rotating body is adapted to come into rollable contact with the flat surface of another one of the foundation or the base and the base isolation support object on the cross-sectionally circular arc-shaped convex outer surface thereof, and, in a stationary state, the center of curvature of the cross-sectionally circular arc-shaped convex outer surface of the rotating body is positioned eccentrically with respect to the center of curvature of the cross-sectionally circular arc-shaped outer surface of the rotating body toward the side of one of the foundation or the base and the base isolation support object in a vertical direction. As a result, the base isolation supporting device can be installed by using as it is the building floor or the like where a fixture such as a display rack, a bookshelf, or the like, is installed, and since the period of vibration can be determined by the amount of eccentricity in the vertical direction between the center of curvature of the cross-sectionally circular arc-shaped convex outer surface of the rotating body and the center of curvature of the cross-sectionally circular arc-shaped outer surface of the rotating body in the stationary state, it is possible to easily attain a long period.

In the present invention, the cross-sectionally circular arc-shaped outer surface of the support may be a cross-sectionally circular arc-shaped convex surface, and the cross-sectionally circular arc-shaped outer surface of the rotating body may be a cross-sectionally circular arc-shaped concave surface. Alternatively, the cross-sectionally circular arc-shaped outer surface of the support may be a cross-sectionally circular arc-shaped concave surface, and the cross-sectionally circular arc-shaped outer surface of the rotating body may be a cross-sectionally circular arc-shaped convex surface.

In the present invention, the rotating body may be rotatable about a center of curvature of the cross-sectionally circular arc-shaped outer surface of the support. In this case, in the stationary state (the state in which the base isolation support object to be supported is not vibrating in the horizontal direction relative to the foundation or the base, and the base isolation supporting device is not exhibiting a base insulation function), the center of curvature of the cross-sectionally circular arc-shaped outer surface of the support and the center of curvature of the cross-sectionally circular arc-shaped convex outer surface of the rotating body may be positioned on an identical vertical line.

The rotating body in its entirety may be constituted by a rigid member, but the rotating body may include a rigid body having a cross-sectionally circular arc-shaped outer surface and an elastic body secured to the rigid body and having a cross-sectionally circular arc-shaped convex outer surface, or may conversely include an elastic body having a cross-sectionally circular arc-shaped outer surface and a rigid body secured to the elastic body and having a cross-sectionally circular arc-shaped convex outer surface. If an elastic body is interposed between the support and the flat surface, it is possible to absorb vibrations in the vertical direction of the foundation or the base by means of the elastic body, and trigger action can be obtained due to the slight elastic deformation of the elastic body in the stationary state of the base isolation supporting device. Furthermore, in the case where the rotating body has an elastic body having a cross-sectionally circular arc-shaped convex outer surface, it is possible to prevent unexpected slippage with respect to the flat surface at the cross-sectionally circular arc-shaped convex outer surface coming into contact with the flat surface, making it possible to effect the rotation and rolling of the rotating body reliably. In addition, by applying the elastic body to the support, the vibrations in the vertical direction of the foundation or the base may be absorbed by the elastic deformation of the elastic body of the support.

In the present invention, the support may be adapted to be affixed to the base isolation support object, in which case the rotating body at the cross-sectionally circular arc-shaped convex outer surface may be adapted to be brought into rollable contact with the flat surface of the foundation or the base, and the center of curvature of the cross-sectionally circular arc-shaped convex outer surface of the rotating body may be positioned eccentrically upwardly in the vertical direction with respect to the center of curvature of the cross-sectionally circular arc-shaped outer surface of the rotating body. Conversely, the support may be adapted to be affixed to the foundation or the base, in which case the rotating body at the cross-sectionally circular arc-shaped convex outer surface may be adapted to be brought into rollable contact with the flat surface of the base isolation support object, and the center of curvature of the cross-sectionally circular arc-shaped convex outer surface of the rotating body may be positioned eccentrically downwardly in the vertical direction with respect to the center of curvature of the cross-sectionally circular arc-shaped outer surface of the rotating body.

A base isolation supporting device in accordance with another aspect of the present invention comprises: a support which is adapted to be affixed to one of a foundation or a base and a base isolation support object so as to receive a load of the base isolation support object to be supported on the foundation or the base, and which has a first cross-sectionally circular arc-shaped convex outer surface; and a rotating body which has a cross-sectionally circular arc-shaped concave outer surface which is brought into slidable contact with the first cross-sectionally circular arc-shaped convex outer surface of the support, and which, at a second cross-sectionally circular arc-shaped convex outer surface thereof, is adapted to be brought into rollable contact with a flat surface of another one of the foundation or the base and the base isolation support object, so as to receive the load of the base isolation support object together with the support, wherein the rotating body is rotatable with respect to the support about a center of curvature of the cross-sectionally circular arc-shaped concave outer surface of the rotating body, the second cross-sectionally circular arc-shaped convex outer surface of the rotating body has a greater radius of curvature than a radius of curvature of the cross-sectionally circular arc-shaped concave outer surface of the rotating body, and, in a stationary state, a center of curvature of the second cross-sectionally circular arc-shaped convex outer surface of the rotating body is positioned eccentrically with respect to the center of curvature of the cross-sectionally circular arc-shaped concave outer surface of the rotating body toward a side of one of the foundation or the base and the base isolation support object in a vertical direction.

According to the base isolation supporting device in accordance with the aspect of the present invention, the rotating body has a cross-sectionally circular arc-shaped convex outer surface which is adapted to be brought into rollable contact with the flat surface of another one of the foundation or the base and the base isolation support object; the rotating body is rotatable with respect to the support about the center of curvature of the cross-sectionally circular arc-shaped concave outer surface of the rotating body; the second cross-sectionally circular arc-shaped convex outer surface of the rotating body has a greater radius of curvature than the radius of curvature of the cross-sectionally circular arc-shaped concave outer surface of the rotating body; and, in a stationary state, the center of curvature of the second cross-sectionally circular arc-shaped convex outer surface of the rotating body is positioned eccentrically with respect to the center of curvature of the cross-sectionally circular arc-shaped concave outer surface of the rotating body toward the side of one of the foundation or the base and the base isolation support object in the vertical direction. As a result, the base isolation supporting device can be installed by using as it is the building floor or the like where a fixture such as a display rack, a bookshelf, or the like, is installed, and since the period of vibration can be determined by the amount of eccentricity in the vertical direction between the center of curvature of the cross-sectionally circular arc-shaped convex outer surface of the rotating body and the center of curvature of the cross-sectionally circular arc-shaped concave outer surface of the rotating body in the stationary state, it is possible to easily attain a long period.

In a preferred example of the base isolation supporting device in accordance with still another aspect of the present invention, the first cross-sectionally circular arc-shaped convex outer surface of the support has an identical radius of curvature to the radius of curvature of the cross-sectionally circular arc-shaped concave outer surface of the rotating body, in which case centers of curvature of the first cross-sectionally circular arc-shaped convex outer surface of the support and the cross-sectionally circular arc-shaped concave outer surface of the rotating body are positioned at an identical position. In another example, the first cross-sectionally circular arc-shaped convex outer surface of the support has a smaller radius of curvature than the radius of curvature of the cross-sectionally circular arc-shaped concave outer surface of the rotating body.

In the base isolation supporting device in accordance with the aspect of the present invention, in the stationary state, the centers of curvature of the first cross-sectionally circular arc-shaped convex outer surface of the support and the cross-sectionally circular arc-shaped concave outer surface and the second cross-sectionally circular arc-shaped convex outer surface of the rotating body are positioned on an identical vertical line.

In the base isolation supporting device in accordance with a further aspect of the present invention, the rotating body in its entirety may be constituted by a rigid member, but the rotating body may include a rigid body having a cross-sectionally circular arc-shaped concave outer surface and an elastic body secured to the rigid body and having the second cross-sectionally circular arc-shaped convex outer surface, or may conversely include an elastic body having a cross-sectionally circular arc-shaped concave outer surface and a rigid body secured to the elastic body and having the second cross-sectionally circular arc-shaped convex outer surface. If an elastic body is interposed between the support and the flat surface, it is possible to absorb vibrations in the vertical direction of the foundation or the base by means of the elastic body, and trigger action can be obtained due to the slight elastic deformation of the elastic body in the stationary state. Furthermore, in the case where the rotating body has an elastic body having the second cross-sectionally circular arc-shaped convex outer surface, it is possible to prevent unexpected slippage with respect to the flat surface at the second cross-sectionally circular arc-shaped convex outer surface coming into contact with the flat surface, making it possible to effect the rotation and rolling of the rotating body reliably. In addition, by applying the elastic body to at least one of a main body and a sliding portion of the support, the vibrations in the vertical direction of the foundation or the base may be absorbed by the elastic deformation of the elastic body of the support.

In the base isolation supporting device in accordance with a further aspect of the present invention, the support may be adapted to be affixed to the base isolation support object, in which case the rotating body at the second cross-sectionally circular arc-shaped convex outer surface may be adapted to be brought into rollable contact with the flat surface of the foundation or the base, and the center of curvature of the second cross-sectionally circular arc-shaped convex outer surface of the rotating body may be positioned eccentrically upwardly in the vertical direction with respect to the center of curvature of the cross-sectionally circular arc-shaped concave outer surface of the rotating body. Alternatively, the support may be adapted to be affixed to the foundation or the base, in which case the rotating body at the second cross-sectionally circular arc-shaped convex outer surface may be adapted to be brought into rotatable contact with the flat surface of the base isolation support object, and the center of curvature of the second cross-sectionally circular arc-shaped convex outer surface of the rotating body may be positioned eccentrically downwardly in the vertical direction with respect to the center of curvature of the cross-sectionally circular arc-shaped concave outer surface of the rotating body.

In the present invention, as the base isolation support object to be supported, it is possible to cite a fixture such as a display rack of a store or the like, a bookshelf of an office, a library, a general dwelling house, or the like, office equipment, machinery of a plant and a bed with machinery mounted thereon, inspection and diagnostic equipment of a hospital, a compact warehouse, and the like. However, the present invention is not limited to the same. As the base, it is possible to cite a foundation floor structured on the ground, a floor of a structure such as a store, an office, a library, a general dwelling house, a hospital, and a warehouse, but the present invention is not limited to the same.

In cases where the trigger function (function in which sliding does not occur at vibration acceleration of a fixed level or below, and sliding occurs at vibration acceleration exceeding the fixed level) and a vibration damping function (function in which vibrational energy causing sliding is absorbed through the dissipation of the vibration as heat in sliding) are not required, the cross-sectionally circular arc-shaped outer surface of the support, the cross-sectionally circular arc-shaped outer surface or the first cross-sectionally circular arc-shaped convex outer surface of the rotating body, and the cross-sectionally circular arc-shaped concave outer surface of the rotating body, which serve as sliding surfaces, may be constituted by surfaces whose coefficient of friction is extremely small. In contrast, in cases where the trigger function and the vibration damping function are required, such outer surfaces may be constituted by surfaces having a coefficient of friction of an appropriate level. If the trigger function is provided, it is possible to avoid unnecessary and oversensitive relative vibration of the base isolation support object by imparting a small vibration acceleration to the foundation or the base and a small vibration acceleration to the base isolation support object, and if the vibration damping function is provided, it becomes possible to return the base isolation support object which once vibrated relative to the foundation or the base to the stationary state in an early stage.

On the other hand, the cross-sectionally circular arc-shaped convex outer surface of the rotating body serving as a rolling surface should preferably have a coefficient of friction of an appropriate level so as not to slide easily but to roll on the flat surface of the foundation or the base or the base isolation support object in the vibration of an earthquake in the horizontal direction.

The cross-sectionally circular arc-shaped outer surface of the support and the cross-sectionally circular arc-shaped outer surface and the cross-sectionally circular arc-shaped convex outer surface of the rotating body, or the first cross-sectionally circular arc-shaped convex outer surface of the support and the cross-sectionally circular arc-shaped concave outer surface and the second cross-sectionally circular arc-shaped convex outer surface of the rotating body, may be each constituted by a portion of a cylindrical surface or may be constituted by a portion of a spherical surface. In the case where the outer surface is constituted by a portion of a cylindrical surface, it is possible to impart directionality to the base isolation effect, and in the case where it is constituted by a portion of a spherical surface, it is possible to exhibit the base isolation effect in the vibration of the horizontal surface in all directions. In the case where directionality is imparted to the base isolation effect, all of the cross-sectionally circular arc-shaped outer surface of the support and the cross-sectionally circular arc-shaped outer surface and the cross-sectionally circular arc-shaped convex outer surface of the rotating body, or all of the first cross-sectionally circular arc-shaped convex outer surface of the support and the cross-sectionally circular arc-shaped concave outer surface and the second cross-sectionally circular arc-shaped convex outer surface of the rotating body need not be formed by a portion of a cylindrical surface, and it suffices if any one of them is formed by a portion of a cylindrical surface.

Each elastic body may be formed of a natural rubber, a synthetic rubber, or a synthetic resin material having elasticity, and the elastic body, if formed of a natural rubber or a synthetic rubber, may be secured to the rigid body by vulcanization bonding, or may be secured to the rigid body by using another adhesive agent.

The base isolation supporting device in accordance with the present invention may further comprise a disengagement prevention mechanism for preventing the disengagement of the rotating body from the support by inhibiting the rotation of the rotating body more than a fixed degree as the rotating body collides against the disengagement prevention mechanism in the rotation of the rotating body about the center of curvature of the cross-sectionally circular arc-shaped outer surface of the support, or in the rotation of the rotating body about the center of curvature of the cross-sectionally circular arc-shaped concave outer surface of the rotating body with respect to the support. The disengagement prevention mechanism may have an enclosure body which is mounted to the support and encloses the rotating body, in which case the enclosure body may have an inner surface which the rotating body contacts in the rotation of the rotating body more than a fixed degree about the center of curvature of the cross-sectionally circular arc-shaped outer surface of the support, or in the rotation of the rotating body more than a fixed degree about the center of curvature of the cross-sectionally circular arc-shaped concave outer surface of the rotating body with respect to the support.

With the base isolation supporting device having the disengagement prevention mechanism, even if the rotating body tends to be rotated largely by an unexpected large tremor, the disengagement of the rotating body from the support can be prevented by inhibiting the rotation of the rotating body more than a fixed degree, with the result that it is possible to prevent the fall or the like of the base isolation support object, making it possible to minimize the damage caused by an earthquake.

ADVANTAGES OF THE INVENTION

According to the present invention, it is possible to provide a base isolation supporting device which can be installed by using as it is the building floor or the like where a base isolation support object, including a fixture such as a display rack, a bookshelf, or the like, is installed, and which is capable of easily attaining a long period thereof.

BRIEF DESCRIPTION OF THE DRAWINGS

Fig. 1 is an explanatory side elevational view of a preferred embodiment in accordance with the present invention;
Fig. 2 is an explanatory view of the operation of the embodiment shown in Fig. 1;
Fig. 3 is an explanatory side elevational view of another preferred embodiment in accordance with the present invention;
Fig. 4 is an explanatory side elevational view of still another preferred embodiment in accordance with the present invention;
Fig. 5 is an explanatory view of the operation of the embodiment shown in Fig. 4;
Fig. 6 is an explanatory side elevational view of a further preferred embodiment in accordance with the present invention;
Fig. 7 is an explanatory view of the operation of the embodiment shown in Fig. 6;
Fig. 8 is an explanatory side elevational view of a still further preferred embodiment in accordance with the present invention;
Fig. 9 is an explanatory side elevational view of a further preferred embodiment in accordance with the present invention;
Fig. 10 is an explanatory side elevational view of a further preferred embodiment in accordance with the present invention; and
Fig. 11 is an explanatory view of the operation of the embodiment shown in Fig. 10.

MODE FOR CARRYING OUT THE INVENTION

Next, a more detailed description will be given of the invention on the basis of the preferred embodiments illustrated in the drawings. It should be noted that the invention is not limited to these embodiments.

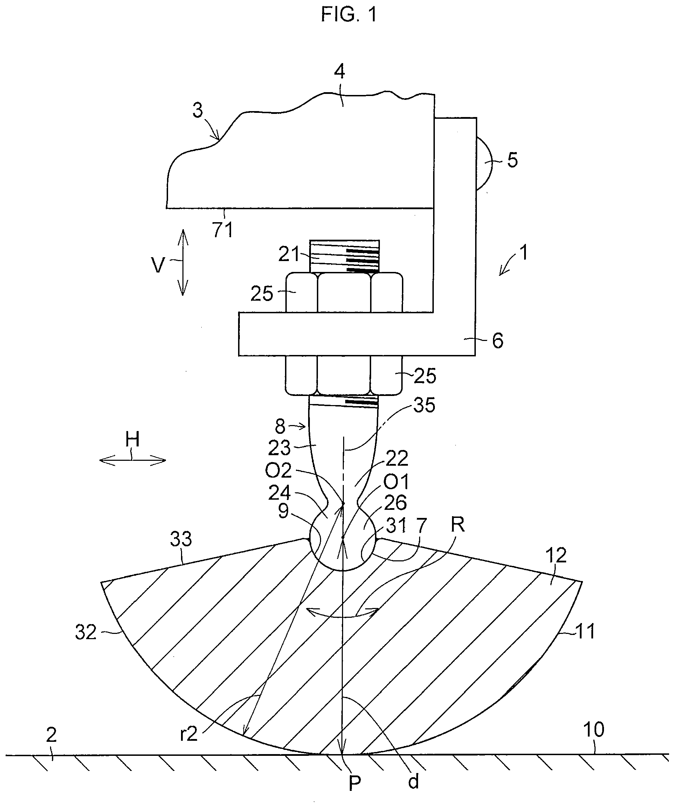

In Fig. 1, a base isolation supporting device 1 in accordance with this embodiment includes a support 8 which is adapted to be affixed by a screw 5 or the like through a fitting 6 to a lower portion of an outer casing 4 of a fixture 3, such as a display rack of a store, i.e., a base isolation support object to be supported on a floor 2 of the store, i.e., a foundation or a base, in order to receive the load, acting in a vertical direction V, of the fixture 3, the support 8 having a cross-sectionally circular arc-shaped convex outer surface 7 with a center O1, i.e., a center of curvature thereof; and a rotating body 12 which has a cross-sectionally circular arc-shaped concave outer surface 9 with a shape complementary to the cross-sectionally circular arc-shaped convex outer surface 7 of the support 8 and a center of curvature at the same position as the center O1, and which, at the cross-sectionally circular arc-shaped concave outer surface 9, is adapted to be brought into contact with the cross-sectionally circular arc-shaped convex outer surface 7 of the support 8 slidably and rotatably in an R direction about the center O1, while, at a cross-sectionally circular arc-shaped convex outer surface 11 having a center 02, i.e., a center of curvature thereof, coming into contact with a flat surface 10 of the floor 2 rotatably in the R direction about the center 02, namely, coming into contact therewith rollably about the center 02, so as to receive together with the support 8 the load, acting in the vertical direction V, of the fixture 3 via the support 8.

The support 8 has a columnar main body 23 with a threaded portion 21 provided at an upper portion thereof and a constricted portion 22 provided at a lower portion thereof and a partially spherical portion 24 provided integrally on the constricted portion 22 of the main body 23, and the support 8 is fixed to the fitting 6 at the threaded portion 21 positionally adjustably in the vertical direction V by a pair of nuts 25 which are threadedly engaged with the threaded portion 21. The cross-sectionally circular arc-shaped convex outer surface 7 is constituted by a partially spherical convex surface 26 of the partially spherical portion 24 as a portion of a spherical surface.

The rotating body 12 includes the cross-sectionally circular arc-shaped concave outer surface 9 constituted by a partially spherical concave surface 31 as a portion of a spherical surface, the cross-sectionally circular arc-shaped convex outer surface 11 constituted by a partially spherical convex surface 32 as a portion of a spherical surface, and a truncated conical outer surface or a truncated polygonal conical outer surface including a truncated quadrangular conical outer surface or the like, which is continuously connected to the cross-sectionally circular arc-shaped concave outer surface 9 on one side and to the cross-sectionally circular arc-shaped convex outer surface 11 on the other side, i.e., a truncated conical outer surface 33 in this embodiment. The rotating body 12 is rotatable with respect to the cross-sectionally circular arc-shaped convex outer surface 7 of the support 8 in the R direction about the center O1, which is the center of curvature of the cross-sectionally circular arc-shaped convex outer surface 7 of the support 8 and is also the center of curvature of the cross-sectionally circular arc-shaped concave outer surface 9 of the rotating body 12. In a stationary state (the state shown in Fig. 1) of the base isolation supporting device 1, the center 02, which is the center of curvature of the cross-sectionally circular arc-shaped convex outer surface 11 of the rotating body 12, is positioned eccentrically with respect to the center O1, which is the center of curvature of the cross-sectionally circular arc-shaped concave outer surface 9 of the rotating body 12, upwardly toward the fixture 3 side in the vertical direction V with an amount of eccentricity δ. In the stationary state of the base isolation supporting device 1, the center O1, which is the center of curvature of the cross-sectionally circular arc-shaped convex outer surface 7 of the support 8, and the center 02, which is the center of curvature of the cross-sectionally circular arc-shaped convex outer surface 11 of the rotating body 12, are positioned on an identical vertical line 35. In the stationary state of the base isolation supporting device 1, the cross-sectionally circular arc-shaped convex outer surface 11 of the rotating body 12 has a radius of curvature r2 which is greater than a distance d between the center O1 and a position P where the cross-sectionally circular arc-shaped convex outer surface 11 comes into contact with the flat surface 10 of the floor 2, and hence the amount of eccentricity δ is r2 - d.

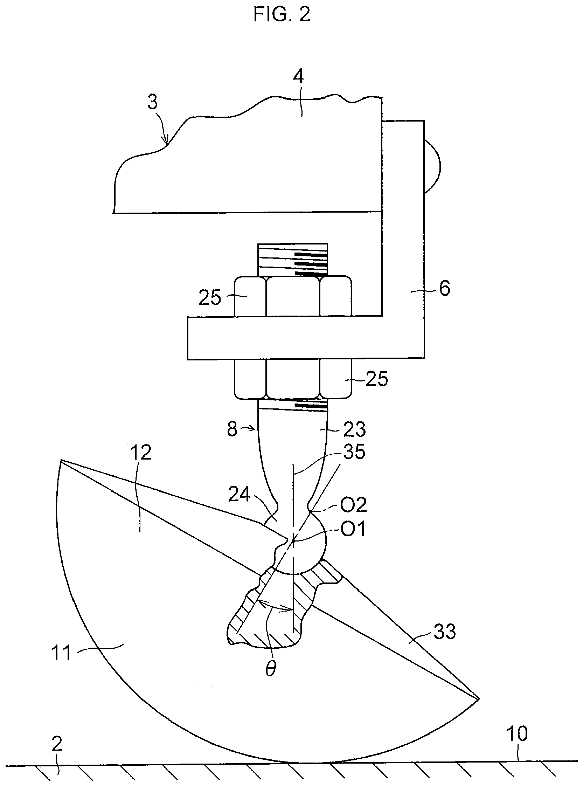

In the case where a tremor in a horizontal direction H due to an earthquake is not applied to the floor 2, each of a plurality of, at least three, base isolation supporting devices 1 disposed at the lower portion of the outer casing 4 of the fixture 3 is in the stationary state shown in Fig. 1, and supports the fixture 3 by sharing the load of the fixture 3 on the floor 2. When a tremor in the horizontal direction H due to an earthquake is applied to the floor 2, the rotating body 12 of each base isolation supporting device 1 rollingly rotates on the flat surface 10 of the floor 2 in the R direction about the center O1 with respect to the partially spherical portion 24, as shown in Fig. 2. By virtue of this rotation, each base isolation supporting device 1 prevents the transmission to the fixture 3 of the tremor in the horizontal direction H applied to the floor 2, thereby supporting the fixture 3 in a base-isolated manner. Meanwhile, a return moment M = W · δ · sinθ (where W is the load applied to the rotating body 12; δ is the amount of eccentricity δ = (r2 - d); and θ is the angle of rotation of the rotating body 12) for returning to the stationary state occurs, at each rotated position of the rotating body 12, to the rotating body 12 which is adapted to lift the fixture 3 in the vertical direction V together with its rotation in the R direction because of the difference between the distance d and the radius of curvature r2 of the cross-sectionally circular arc-shaped convex outer surface 11 ascribable to the amount of eccentricity δ between the center O1 and the center 02. By virtue of this return moment M, the rotating body 12 which undergoes so-called pendular movement having a period T is returned to its rotational position in the stationary state upon the convergence of the pendular movement due to the dissipation of vibrational energy attributable to the sliding friction of the cross-sectionally circular arc-shaped concave outer surface 9 with respect to the cross-sectionally circular arc-shaped convex outer surface 7 as well as the rolling friction of the rotating body 12 with respect to the flat surface 10 of the floor 2 after the extinction of the tremor of the floor 2 in the horizontal direction H due to the earthquake, to thereby return the fixture 3 to its original position persisting prior to the earthquake tremor.

The period T of the pendular movement of the rotating body 12 is expressed by the formula (1), and in the case where θ is small, θ / sinθ ≈ 1, with the result that the period T is expressed by the formula (2), and the smaller the amount of eccentricity δ (= r2 - d), which is the difference between the distance d and the radius of curvature r2 of the cross-sectionally circular arc-shaped convex outer surface 11, the longer the period T becomes, whereas, to the contrary, the greater the amount of eccentricity δ (= r2 - d), the shorter the period T becomes.

[Mathematical Formula 1]

$$T = 2\pi \cdot \sqrt{\frac{1}{g}} \cdot \left(\frac{r_2}{\sqrt{\delta}}\right) \cdot \sqrt{\frac{\theta}{\sin\theta}} \quad \cdots\cdots\cdots\cdots (1)$$

where, g is the acceleration of gravity.

[Mathematical Formula 2]

$$T \approx 2\pi \cdot \sqrt{\frac{1}{g}} \cdot \left(\frac{r_2}{\sqrt{\delta}}\right) \quad \cdots\cdots\cdots\cdots\cdots (2)$$

With above-described base isolation supporting device 1, the rotating body 12 at the cross-sectionally circular arc-shaped convex outer surface 11 thereof is adapted to be brought into contact with the flat surface 10 of the floor 2 rollably and rotatably, and, in the stationary state, the center 02, which is the center of curvature of the cross-sectionally circular arc-shaped convex outer surface 11, is offset from the center O1, which is the center of curvature of the cross-sectionally circular arc-shaped concave outer surface 9, upwardly in the vertical direction V with the amount of eccentricity δ, with the result that the base isolation supporting device 1 can be installed by using as it is the flat surface 10 of the floor 2. Moreover, since the period T of the pendular movement of the rotating body 12 can be determined by the amount of eccentricity δ which is the difference between the distance d and the radius of curvature r2 of the cross-sectionally circular arc-shaped convex outer surface 11, it is possible to easily attain a long period. Moreover, since the cross-sectionally circular arc-shaped convex outer surface 7 is constituted by the partially spherical convex surface 26, the cross-sectionally circular arc-shaped concave outer surface 9 is constituted by the partially spherical concave surface 31, and the cross-sectionally circular arc-shaped convex outer surface 11 is constituted by the partially spherical convex surface 32, namely, since the respective surfaces are constituted by spherical surfaces, the fixture 3 can be supported in a base-isolated manner with respect to the tremors of an earthquake in all directions in the horizontal direction H. In addition, since the position for mounting the support 8 to the fitting 6 is adapted to be adjustable by means of the threaded portion 21 and the nuts 25, the fixture 3 can be supported in a base-isolated manner at an arbitrary position in the vertical direction V.

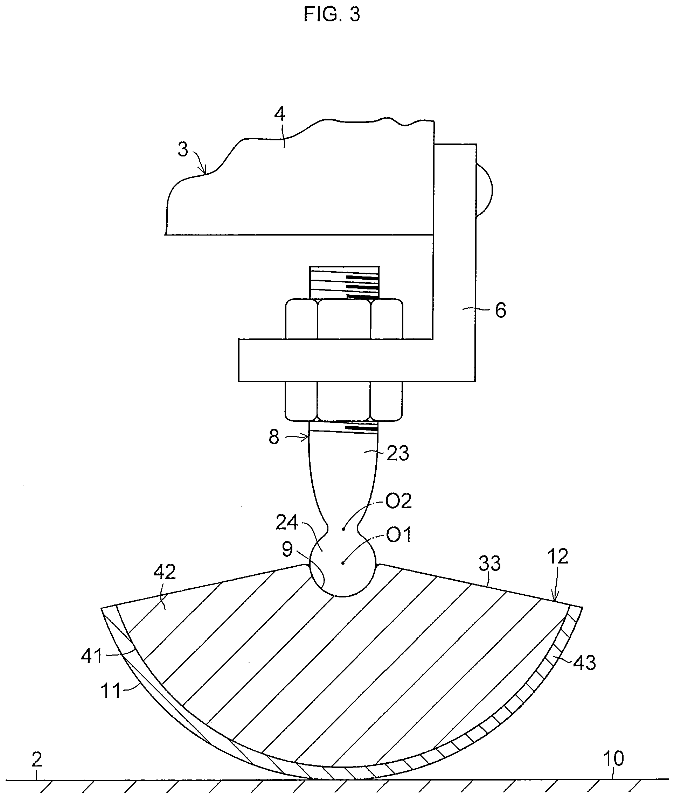

Incidentally, with the base isolation supporting device 1 shown in Fig. 1, the rotating body 12 is formed of a one-piece body constituted by a rigid body. Alternatively, however, as shown in Fig. 3, the rotating body 12 may include a rigid body 42 having the cross-sectionally circular arc-shaped concave outer surface 9, the truncated conical outer surface 33, and a partially spherical convex surface 41, as well as a natural rubber-made elastic body 43 secured to the partially spherical convex surface 41 of the rigid body 42 by vulcanization bonding and having the cross-sectionally circular arc-shaped convex outer surface 11. If the rotating body 12 is thus provided with the elastic body 43 as a coating layer for the rigid body 42, the fixture 3 can be supported in a base-isolated manner with respect to the tremors of an earthquake in all directions in the horizontal direction H, and, by virtue of the elastic deformation of the elastic body 43, the fixture 3 can be supported in a base-isolated manner with respect to the tremors of an earthquake in the vertical direction V applied to the floor 2, thereby making it possible to protect the fixture 3 itself and an article inside the fixture 3 as well. In addition, it becomes possible to obtain trigger action by the flattening of the cross-sectionally circular arc-shaped convex outer surface 11 due to the depression, caused by partial elastic deformation, of that portion of the elastic body 43 which receives the load in the vertical direction V in the stationary state.

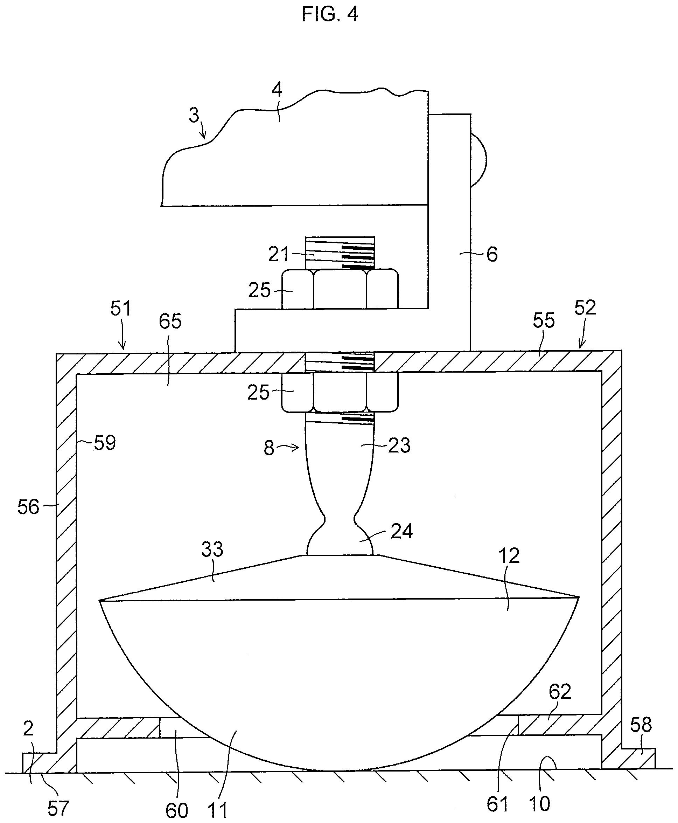

In the base isolation supporting devices 1 shown in Figs. 1 and 3, the possibility of the rotating body 12 coming off the support 8 occurs in the tremor of an earthquake accompanying a large rotational angle θ of the rotating body 12. However, as shown in Fig. 4, the base isolation supporting device 1 may further have a disengagement prevention mechanism 51 for preventing the disengagement of the rotating body 12 from the support 8 by inhibiting the rotation of the rotating body 12 more than a fixed degree as the rotating body 12 collides against the disengagement prevention mechanism 51 in the rotation in the R direction of the rotating body 12 about the center O1 which is the center of curvature of the cross-sectionally circular arc-shaped convex outer surface 7 of the support 8. The disengagement prevention mechanism 51 has an enclosure body 52 which is mounted to the support 8 and encloses the rotating body 12.

The enclosure body 52 includes a disk-shaped ceiling portion 55 secured to the threaded portion 21 of the support 8 by being sandwiched between the fitting 6 and the nuts 25; a cylindrical portion 56 formed integrally at an upper end thereof with an outer peripheral edge of the ceiling portion 55 in such a manner as to surround the rotating body 12 from around; an annular outer collar portion 58 formed integrally with a lower end of the cylindrical portion 56 in such a manner as to project outwardly in the horizontal direction H from the lower end of the cylindrical portion 56, an annular lower surface 57 of the annular outer collar portion 58 being in contact with the flat surface 10 of the floor 2; and an annular inner collar portion 62 which is formed integrally with the cylindrical portion 56 above at a position higher than the annular outer collar portion 58 in such a manner as to project inwardly in the horizontal direction H from a cylindrical inner surface 59 of the cylindrical portion 56, and which has a cylindrical inner peripheral surface 61 defining an opening 60 in which the rotating body 12 is capable of rotating.

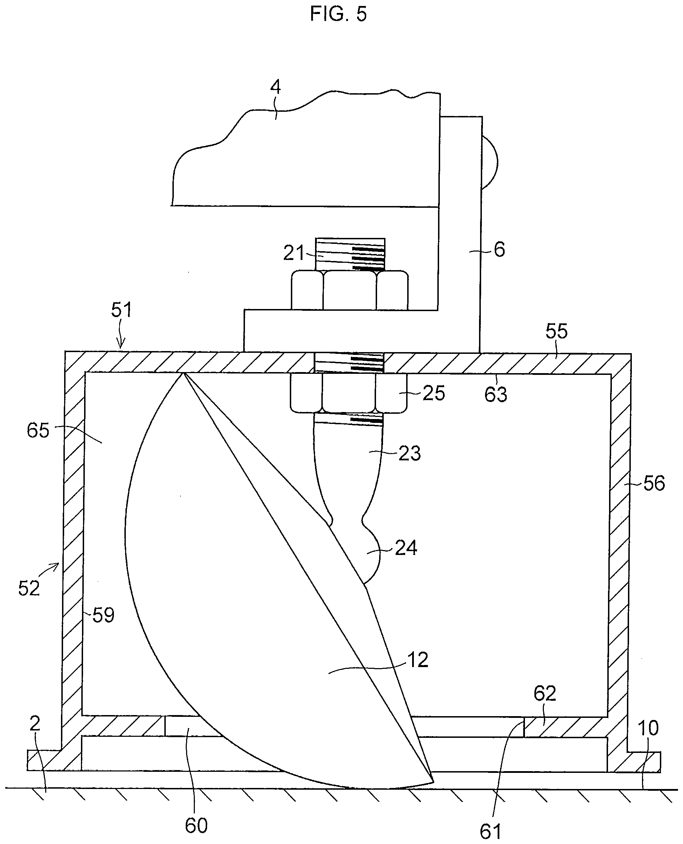

With the base isolation supporting device 1 having the disengagement prevention mechanism 51, as shown in Fig. 5, in the rotation of the rotating body 12 in the R direction more than a fixed degree due to the tremor of an earthquake in the horizontal direction H accompanying the large rotational angle θ of the rotating body 12 about the center O1, which is the center of curvature of the cross-sectionally circular arc-shaped convex outer surface 7 of the support 8, the rotating body 12 is adapted to collide against and contact a lower surface 63 of the ceiling portion 55 which is the inner surface of the enclosure body 52, to thereby inhibit any further rotation. Thus, in the rotation of the rotating body 12 more than a fixed degree about the center O1, which is the center of curvature of the cross-sectionally circular arc-shaped convex outer surface 7 of the support 8, the enclosure body 52 having the lower surface 63 of the ceiling portion 55 which is the inner surface which the rotating body 12 contacts is adapted to prevent the disengagement of the rotating body 12 from the partially spherical portion 24 of the support 8.

According to the base isolation supporting device 1 having the disengagement prevention mechanism 51, even if the rotating body 12 tends to be rotated largely by an unexpected large tremor in the horizontal direction H, the disengagement of the rotating body 12 from the support 8 can be prevented by inhibiting the rotation of the rotating body 12 more than a fixed degree, with the result that it is possible to prevent the fall or the like of the fixture 3, making it possible to minimize the damage caused by an earthquake.

With the disengagement prevention mechanism 51 having the enclosure body 52, since the annular outer collar portion 58 is provided which is in contact with the flat surface 10 at the annular lower surface 57 thereof in the stationary state of the base isolation supporting device 1, an interior 65 of the enclosure body 52 in the stationary state of the base isolation supporting device 1 can be sealed with respect to the outside, so that it is possible to prevent ingress of dust into that interior 65 and avoid faulty operation of the base isolation supporting device 1 due to the dust. It should be noted that the function of the elastic body 43 of the rotating body 12 shown in Fig. 3 can be obtained satisfactorily by providing an elastic plate similar to the elastic body 43 on the annular lower surface 57 by means of bonding or the like, or by providing a clearance gap approximately equal to the thickness of the elastic body 43 between the annular lower surface 57 and the flat surface 10.

In the above-described base isolation supporting device 1, the support 8 is affixed to the outer casing 4 of the fixture 3, and the rotating body 12 at its cross-sectionally circular arc-shaped convex outer surface 11 is rollably brought into contact with the flat surface 10 of the floor 2. Alternatively, however, the support 8 at the threaded portion 21 may be affixed to the floor 2, and the cross-sectionally circular arc-shaped convex outer surface 11 of the rotating body 12 may be rotatably brought into contact with a flat surface 71 which is the lower surface of the outer casing 4 of the fixture 3. In other words, a combination assembly of the support 8 and the rotating body 12 may be set such that the top and the bottom thereof are in reverse. In the base isolation supporting device having a top-bottom inverted arrangement, it suffices if the center 02, which is the center of curvature of the cross-sectionally circular arc-shaped convex outer surface 11 of the rotating body 12, is positioned eccentrically with the amount of eccentricity $\delta$ downwardly toward the floor 2 side in the vertical direction V with respect to the center O1, which is the center of curvature of the cross-sectionally circular arc-shaped concave outer surface 9 of the rotating body 12, in the stationary state of the base isolation supporting device.

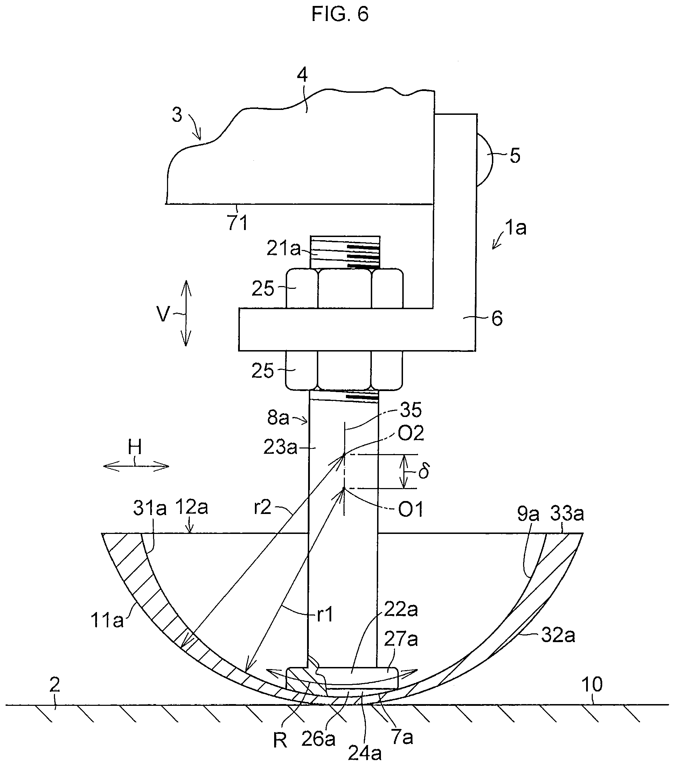

In a base isolation supporting device 1a in accordance with a further embodiment shown in Fig. 6 includes a support 8a which is adapted to be affixed by the screw 5 or the like through the fitting 6 to the lower portion of the outer casing 4 of the fixture 3, in order to receive the load, acting in the vertical direction V, of the fixture 3 to be supported on the floor 2, the support 8a having a cross-sectionally circular arc-shaped convex outer surface 7a with the center O1, i.e., the center of curvature thereof; and a rotating body 12a which has a cross-sectionally circular arc-shaped concave outer surface 9a with a shape complementary to the cross-sectionally circular arc-shaped convex outer surface 7a of the support 8a and a center of curvature at the same position as the center O1, and which, at the cross-sectionally circular arc-shaped concave outer surface 9a, is adapted to be brought into contact with the cross-sectionally circular arc-shaped convex outer surface 7a slidably and rotatably in the R direction about the center O1, while, at a cross-sectionally circular arc-shaped convex outer surface 11a having the center 02, i.e., a center of curvature thereof, coming into contact with the flat surface 10 of the floor 2 rotatably in the R direction about the center 02, namely, coming into contact therewith rollably about the center 02, the rotating body 12a being adapted to receive together with the support 8a the load, acting in the vertical direction V, of the fixture 3 via the support 8a.

The support 8a has a columnar main body 23a having a threaded portion 21a at an upper portion thereof and a sliding portion 27a which is formed integrally with a lower portion of the main body 23a in such a manner as to be disposed between the main body 23a and the rotating body 12a and has the cross-sectionally circular arc-shaped convex outer surface 7a constituted by a partially spherical convex surface 26a as a portion of a spherical surface. The main body 23a is fixed to the fitting 6 at the threaded portion 21a positionally adjustably in the vertical direction V by the pair of nuts 25 which are threadedly engaged with the threaded portion 21 a. The main body 23a is adapted to be affixed to the lower portion of the outer casing 4 of the fixture 3 by means of the fitting 6. The sliding portion 27a has a disk portion 22a formed integrally with the lower portion of the main body 23a and a partial spherical portion 24a formed integrally with the disk portion 22a and having the partially spherical convex surface 26a.

The rotating body 12a includes the cross-sectionally circular arc-shaped concave outer surface 9a constituted by the partially spherical concave surface 31a as a portion of a spherical surface, the cross-sectionally circular arc-shaped convex outer surface 11a constituted by a partially spherical convex surface 32a as a portion of a spherical surface, and an annular end face 33 whose inner peripheral edge is continuously connected to the cross-sectionally circular arc-shaped concave outer surface 9a and whose outer peripheral edge is continuously connected to the cross-sectionally circular arc-shaped convex outer surface 11a. The rotating body 12a is slidingly rotatable with respect to the cross-sectionally circular arc-shaped convex outer surface 7a of the support 8a in the R direction about the center O1, which is the center of curvature of the cross-sectionally circular arc-shaped concave outer surface 9a of the rotating body 12a. The cross-sectionally circular arc-shaped convex outer surface 11a has a radius of curvature r2 which is greater than a radius of curvature r1 of the cross-sectionally circular arc-shaped concave outer surface 9a of the rotating body 12a. In the stationary state (the state shown in Fig. 6) of the base isolation supporting device 1a, the center 02, which is the center of curvature of the cross-sectionally circular arc-shaped convex outer surface 11a of the rotating body 12a, is positioned eccentrically with respect to the center O1, which is the center of curvature of the cross-sectionally circular arc-shaped concave outer surface 9a of the rotating body 12a, upwardly toward the fixture 3 side in the vertical direction V with an amount of eccentricity $\delta$ (= r2 - r1). In the stationary state of the base isolation supporting device 1a, the center O1, which is the center of curvature of both the cross-sectionally circular arc-shaped convex outer surface 7a of the support 8a and the cross-sectionally circular arc-shaped concave outer surface 9a of the rotating body 12a, and the center 02, which is the center of curvature of the cross-sectionally circular arc-shaped convex outer surface 11a of the rotating body 12a, are positioned on the identical vertical line 35. Thus, the cross-sectionally circular arc-shaped convex outer surface 7a of the support 8a has the radius of curvature r1 identical to the radius of curvature r1 of the cross-sectionally circular arc-shaped concave outer surface 9a of the rotating body 12a, so that the centers of curvature of the cross-sectionally circular arc-shaped convex outer surface 7a of the support 8a and the cross-sectionally circular arc-shaped concave outer surface 9a of the rotating body 12a are located at the identical position, i.e., at the center O1.

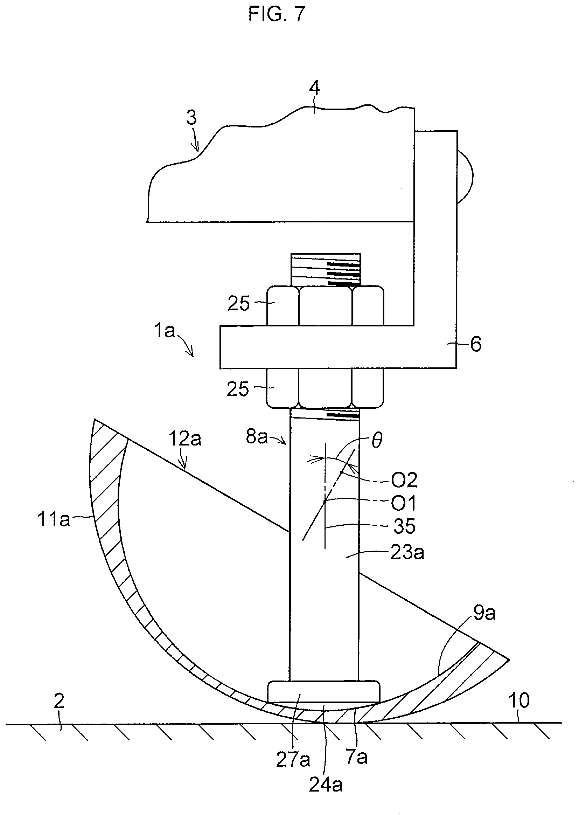

In the case where a tremor in the horizontal direction H due to an earthquake is not applied to the floor 2, each of a plurality of, at least three, base isolation supporting devices 1a disposed at the lower portion of the outer casing 4 of the fixture 3 is in the stationary state shown in Fig. 6, and supports the fixture 3 by sharing the load of the fixture 3 on the floor 2. When a tremor in the horizontal direction H due to an earthquake is applied to the floor 2, the rotating body 12a of each base isolation supporting device 1a rollingly rotates at the cross-sectionally circular arc-shaped convex outer surface 11a on the flat surface 10 of the floor 2 in the R direction about the center O1 with respect to the partially spherical portion 24a while accompanying the sliding of the cross-sectionally circular arc-shaped concave outer surface 9a with respect to the cross-sectionally circular arc-shaped convex outer surface 7a, as shown in Fig. 7. By virtue of this rotation, each base isolation supporting device 1a prevents the transmission to the fixture 3 of the tremor in the horizontal direction H applied to the floor 2, thereby supporting the fixture 3 in a base-isolated manner. Meanwhile, a return moment $M = W \cdot \delta \cdot \sin\theta$ (where W is the load applied to the rotating body 12a; $\delta$ is the amount of eccentricity $\delta = (r2 - r1)$; and $\theta$ is the angle of rotation of the rotating body 12a with respect to the vertical line 35) for returning to the stationary state occurs, at each rotated position of the rotating body 12a, to the rotating body 12a which is adapted to support the fixture 3 in a base-isolated manner and to lift the fixture 3 in the vertical direction V together with its rotation in the R direction because of the difference between the radius of curvature r2 of the cross-sectionally circular arc-shaped convex outer surface 11a and the radius of curvature r1 of the cross-sectionally circular arc-shaped concave outer surface 9a ascribable to the amount of eccentricity $\delta$ between the center O1 and the center 02. By virtue of this return moment M, the rotating body 12a which undergoes so-called pendular movement having a period T is returned to its rotational position in the stationary state upon the convergence of the pendular movement due to the dissipation of vibrational energy attributable to the sliding friction of the cross-sectionally circular arc-shaped concave outer surface 9a with respect to the cross-sectionally circular arc-shaped convex outer surface 7a as well as the rolling friction at the cross-sectionally circular arc-shaped convex outer surface 11a of the rotating body 12a with respect to the flat surface 10 of the floor 2 after the extinction of the tremor of the floor 2 in the horizontal direction H due to the earthquake, to thereby return the fixture 3 to its original position persisting prior to the earthquake tremor.

The period T of the pendular movement of the rotating body 12a is expressed by the formula (1), and in the case where $\theta$ is small, $\theta / \sin\theta \approx 1$, with the result that the period T is expressed by the formula (2), and the smaller the amount of eccentricity $\delta$ (= r2 - r1), which is the difference between the radius of curvature r2 of the cross-sectionally circular arc-shaped convex outer surface 11a and the radius of curvature r1 of the cross-sectionally circular arc-shaped concave outer surface 9a, the longer the period T becomes, whereas, to the contrary, the greater the amount of eccentricity $\delta$ (= r2 - r1), the shorter the period T becomes.

With above-described base isolation supporting device 1a as well, the rotating body 12a has the cross-sectionally circular arc-shaped convex outer surface 11a which is adapted to be brought into contact with the flat surface 10 of the floor 2 rollably and rotatably, and, in the stationary state, the center 02, which is the center of curvature of the cross-sectionally circular arc-shaped convex outer surface 11a, is offset from the center O1, which is the center of curvature of the cross-sectionally circular arc-shaped concave outer surface 9a, upwardly in the vertical direction V with the amount of eccentricity $\delta$, with the result that the base isolation supporting device 1a can be installed by using as it is the flat surface 10 of the floor 2. Moreover, since the period T of the pendular movement of the rotating body 12a can be determined by the amount of eccentricity $\delta$ which is the difference between radius of curvature r1 of the cross-sectionally circular arc-shaped concave outer surface 9a and the radius of curvature r2 of the cross-sectionally circular arc-shaped convex outer surface 11a, it is possible to easily attain a long period. Moreover, since the cross-sectionally circular arc-shaped convex outer surface 7a is constituted by the partially spherical convex surface 26a, the cross-sectionally circular arc-shaped concave outer surface 9a is constituted by the partially spherical concave surface 31 a, and the cross-sectionally circular arc-shaped convex outer surface 11a is constituted by the partially spherical convex surface 32a, namely, since the respective surfaces are constituted by spherical surfaces, the fixture 3 can be supported in a base-isolated manner with respect to the tremors of an earthquake in all directions in the horizontal direction H. In addition, since the position for mounting the support 8 to the fitting 6 is adapted to be adjustable by means of the threaded portion 21a and the nuts 25, the fixture 3 can be supported in a base-isolated manner at an arbitrary position in the vertical direction V.

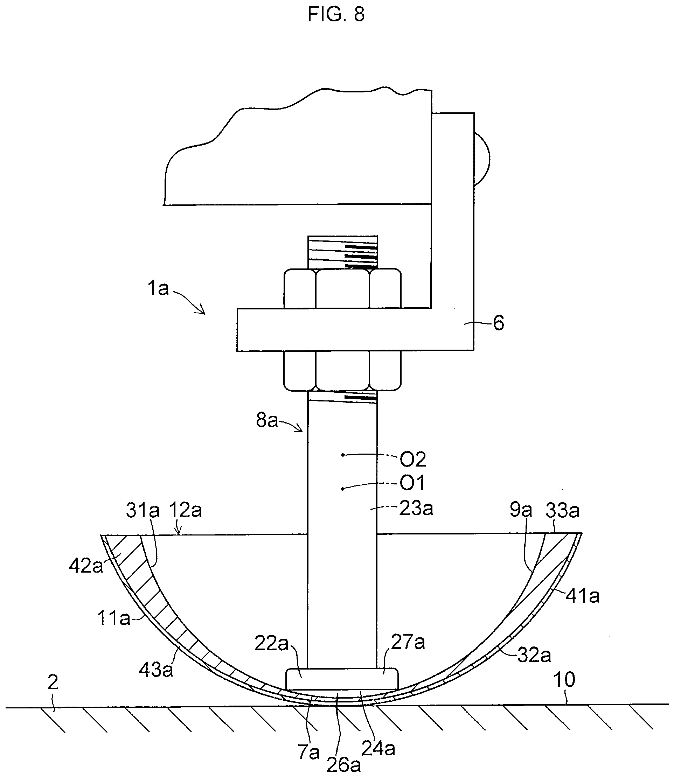

Incidentally, with the base isolation supporting device 1a shown in Fig. 6, the rotating body 12a is formed of a one-piece body constituted by a rigid body. Alternatively, however, as shown in Fig. 8, the rotating body 12a may include a rigid body 42a having the partially spherical concave surface 31a constituted by the cross-sectionally circular arc-shaped concave outer surface 9a, an annular end face 33a, and a partially spherical convex surface 41a, as well as a natural rubber-made elastic body 43a secured to the partially spherical convex surface 41 a of the rigid body 42a by vulcanization bonding and having the partially spherical convex surface 32a constituted by the cross-sectionally circular arc-shaped convex outer surface 11a. If the rotating body 12a is thus provided with the elastic body 43a as a coating layer for the rigid body 42a, the fixture 3 can be supported in a base-isolated manner with respect to the tremors of an earthquake in all directions in the horizontal direction H, and, by virtue of the elastic deformation of the elastic body 43a, the fixture 3 can be supported in a base-isolated manner with respect to the tremors of an earthquake in the vertical direction V applied to the floor 2, thereby making it possible to protect the fixture 3 itself and the article inside the fixture 3 as well. In addition, it becomes possible to obtain trigger action by the flattening of the cross-sectionally circular arc-shaped convex outer surface 11a due to the depression, caused by partial elastic deformation, of that portion of the elastic body 43a which receives the load in the vertical direction V in the stationary state.

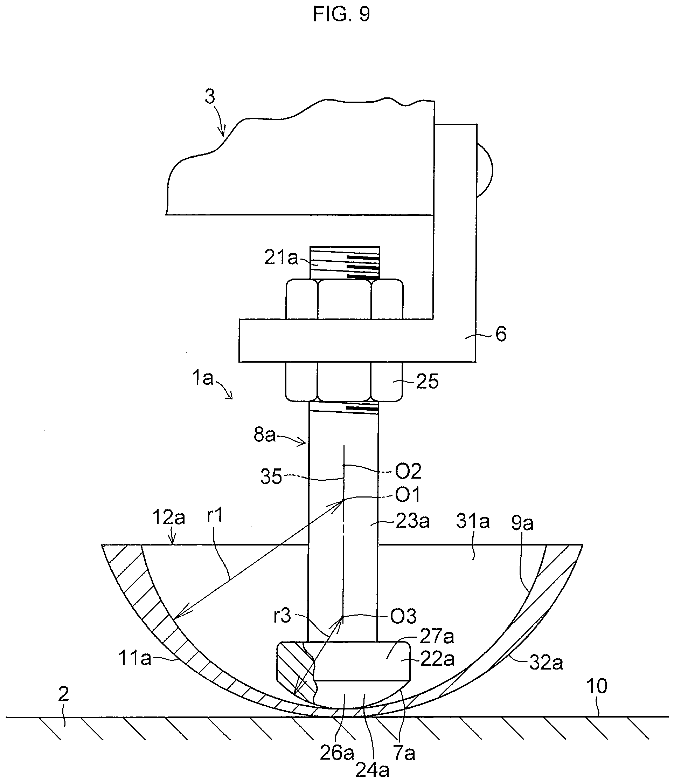

In the base isolation supporting devices 1 shown in Figs. 6 and 8, the cross-sectionally circular arc-shaped convex outer surface 7a of the support 8a has the center O1 at the identical position to the position of the center O1 of the cross-sectionally circular arc-shaped concave outer surface 9a of the rotating body 12a, and has the radius of curvature r1 identical to the radius of curvature r1 of the cross-sectionally circular arc-shaped concave outer surface 9a of the rotating body 12a. Alternatively, however, as shown in Fig. 9, the cross-sectionally circular arc-shaped convex outer surface 7a of the support 8a may have a center 03 on the identical vertical line 35 but at a different position in the vertical direction V from the position of the center O1 of the cross-sectionally circular arc-shaped concave outer surface 9a of the rotating body 12a and a radius of curvature r3 smaller than the radius of curvature r1 of the cross-sectionally circular arc-shaped concave outer surface 9a of the rotating body 12a. In this case, in comparison with the slidable surface contact between the cross-sectionally circular arc-shaped convex outer surface 7a and the cross-sectionally circular arc-shaped concave outer surface 9a in the base isolation supporting devices 1a shown in Figs. 6 and 8, the cross-sectionally circular arc-shaped convex outer surface 7a and the cross-sectionally circular arc-shaped concave outer surface 9a are brought into slidable substantially point contact with each other.

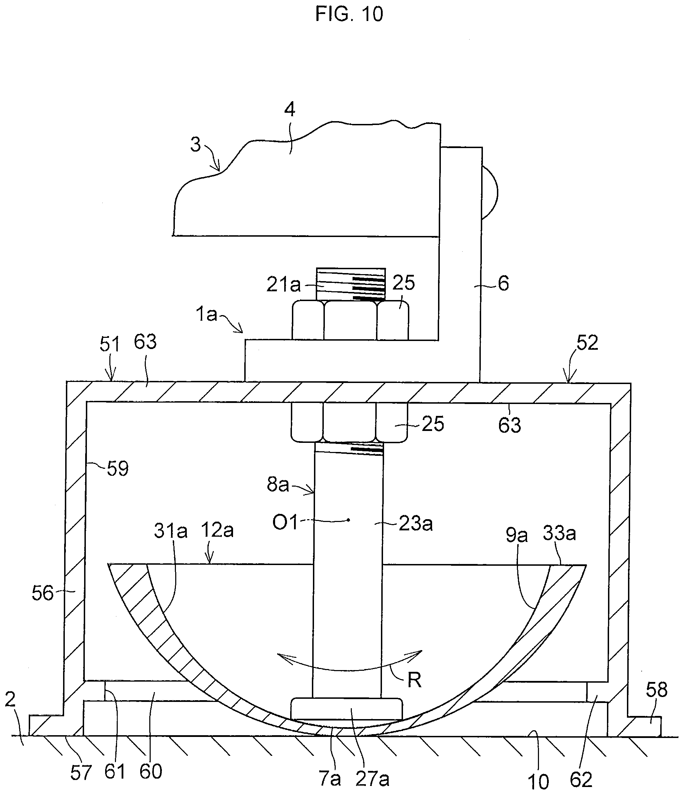

With the above-described base isolation supporting device 1a, the possibility of the rotating body 12a coming off the support 8a occurs in the tremor of an earthquake accompanying the large rotational angle θ of the rotating body 12a. However, as shown in Fig. 10, the base isolation supporting device 1a may further have the above-described disengagement prevention mechanism 51 for preventing the disengagement of the rotating body 12a from the support 8a by inhibiting the rotation of the rotating body 12a more than a fixed degree as the rotating body 12a collides against the disengagement prevention mechanism 51 in the rotation in the R direction of the rotating body 12a about the center O1 which is the center of curvature of the cross-sectionally circular arc-shaped concave outer surface 9a with respect to the support 8a. In the disengagement prevention mechanism 51, the enclosure body 52 encloses the rotating body 12a, the cylindrical portion 56 surrounds the rotating body 12a from around, and the rotating body 12a is rotatable in the opening 60.

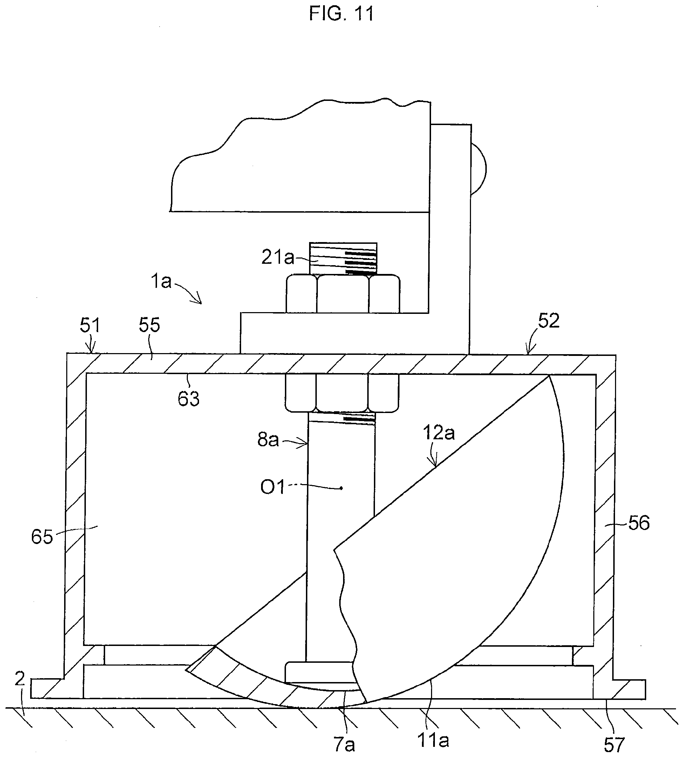

With the base isolation supporting device 1a having the disengagement prevention mechanism 51, as shown in Fig. 11, in the rotation of the rotating body 12a in the R direction more than a fixed degree due to the tremor of an earthquake in the horizontal direction H accompanying the large rotational angle θ of the rotating body 12a about the center O1, which is the center of curvature of the cross-sectionally circular arc-shaped convex outer surface 7a of the support 8a, the rotating body 12a is adapted to collide against and contact the lower surface 63 of the ceiling portion 55, to thereby inhibit any further rotation in the R direction. Thus, in the rotation of the rotating body 12a more than a fixed degree about the center O1, which is the center of curvature of the cross-sectionally circular arc-shaped convex outer surface 7a of the support 8a, the enclosure body 52 having the lower surface 63 of the ceiling portion 55 which is the inner surface which the rotating body 12a contacts is adapted to prevent the disengagement of the rotating body 12a from the sliding portion 27a of the support 8a in the same way as described above.

According to the base isolation supporting device 1a having the disengagement prevention mechanism 51, in the same way as described above, even if the rotating body 12a tends to be rotated largely by an unexpected large tremor in the horizontal direction H, the disengagement of the rotating body 12a from the support 8a can be prevented by inhibiting the rotation of the rotating body 12a more than a fixed degree, with the result that it is possible to prevent the fall or the like of the fixture 3, making it possible to minimize the damage caused by an earthquake.

Also with the disengagement prevention mechanism 51 for the base isolation supporting device 1a, since there is provided the annular outer collar portion 58 which is in contact with the flat surface 10 at the annular lower surface 57 thereof in the stationary state of the base isolation supporting device 1a, the interior 65 of the enclosure body 52 in the stationary state of the base isolation supporting device 1a can be sealed with respect to the outside, so that it is possible to prevent ingress of dust into that interior 65 and avoid faulty operation of the base isolation supporting device 1a due to the dust. Also in the base isolation supporting device 1a in accordance with this embodiment, an elastic plate may be provided on the annular lower surface 57, or a clearance gap may be provided between the annular lower surface 57 and the flat surface 10.

In the above-described base isolation supporting device 1a, the support 8a is affixed to the outer casing 4 of the fixture 3, and cross-sectionally circular arc-shaped convex outer surface 11a of the rotating body 12 is rollably brought into contact with the flat surface 10 of the floor 2. Alternatively, however, in the same way as the base isolation supporting device 1, the support 8a at the threaded portion 21a may be affixed to the floor 2, and the cross-sectionally circular arc-shaped convex outer surface 11a of the rotating body 12a may be rotatably brought into the flat surface 71 which is the lower surface of the outer casing 4 of the fixture 3. In other words, a combination assembly of the support 8a and the rotating body 12a may be set such that the top and the bottom thereof are in reverse. In the base isolation supporting device having a top-bottom inverted arrangement, it suffices if the center 02, which is the center of curvature of the cross-sectionally circular arc-shaped convex outer surface 11a of the rotating body 12a, is positioned eccentrically with the amount of eccentricity δ downwardly toward the floor 2 side in the vertical direction V with respect to the center O1, which is the center of curvature of the cross-sectionally circular arc-shaped concave outer surface 9a of the rotating body 12a, in the stationary state of the base isolation supporting device.

DESCRIPTION OF REFERENCE NUMERALS

1, 1a: base isolation supporting device
2: floor
3: fixture
4: outer casing
5: screw
6: fitting
7, 7a, 11, 11a: cross-sectionally circular arc-shaped convex outer surface
8, 8a: support
9, 9a: cross-sectionally circular arc-shaped concave outer surface
10: flat surface
12, 12a: rotating body
O1, O2: center
d: distance
r1: radius of curvature
r2: radius of curvature

**Claims**

1.  A base isolation supporting device comprising:

    a support which is adapted to be affixed to one of a foundation or a base and a base isolation support object so as to receive a load of the base isolation support object to be supported on the foundation or the base, and which has a cross-sectionally circular arc-shaped outer surface; and
    a rotating body which has a cross-sectionally circular arc-shaped outer surface with a shape complementary to the cross-sectionally circular arc-shaped outer surface of the support, and which, at the cross-sectionally circular arc-shaped outer surface with the shape complementary to the cross-sectionally circular arc-shaped outer surface of the support, is adapted to be brought into slidable contact with the cross-sectionally circular arc-shaped outer surface of the support, while, at a cross-sectionally circular arc-shaped convex outer surface thereof, coming into rollable contact with a flat surface of another one of the foundation or the base and the base isolation support object, so as to receive the load of the base isolation support object together with the support,
    wherein the cross-sectionally circular arc-shaped convex outer surface of the rotating body has a greater radius of curvature than a radius of curvature of the cross-sectionally circular arc-shaped outer surface of the rotating body, and, in a stationary state, a center of curvature of the cross-sectionally circular arc-shaped convex outer surface of the rotating body is positioned eccentrically with respect to a center of curvature of the cross-sectionally circular arc-shaped outer surface of the rotating body toward a side of one of the foundation or the base and the base isolation support object in a vertical direction.

2.  The base isolation supporting device according to claim 1, wherein the cross-sectionally circular arc-shaped outer surface of the support is a cross-sectionally circular arc-shaped convex surface, and the cross-sectionally circular arc-shaped outer surface of the rotating body is a cross-sectionally circular arc-shaped concave surface.

3. The base isolation supporting device according to claim 1, wherein the cross-sectionally circular arc-shaped outer surface of the support is a cross-sectionally circular arc-shaped concave surface, and the cross-sectionally circular arc-shaped outer surface of the rotating body is a cross-sectionally circular arc-shaped convex surface.

4. The base isolation supporting device according to any one of claims 1 to 3, wherein the cross-sectionally circular arc-shaped outer surface of the support and the cross-sectionally circular arc-shaped outer surface and the cross-sectionally circular arc-shaped convex outer surface of the rotating body are each constituted by a portion of a cylindrical surface.

5. The base isolation supporting device according to any one of claims 1 to 3, wherein the cross-sectionally circular arc-shaped outer surface of the support and the cross-sectionally circular arc-shaped outer surface and the cross-sectionally circular arc-shaped convex outer surface of the rotating body are each constituted by a portion of a spherical surface.

6. The base isolation supporting device according to any one of claims 1 to 5, wherein the rotating body is rotatable about a center of curvature of the cross-sectionally circular arc-shaped outer surface of the support.

7. The base isolation supporting device according to claim 6, wherein, in the stationary state, the center of curvature of the cross-sectionally circular arc-shaped outer surface of the support and the center of curvature of the cross-sectionally circular arc-shaped convex outer surface of the rotating body are positioned on an identical vertical line.

8. The base isolation supporting device according to any one of claims 1 to 7, wherein the rotating body includes a rigid body having a cross-sectionally circular arc-shaped outer surface and an elastic body secured to the rigid body and having a cross-sectionally circular arc-shaped convex outer surface.

9. The base isolation supporting device according to any one of claims 1 to 7, wherein the rotating body includes an elastic body having a cross-sectionally circular arc-shaped outer surface and a rigid body secured to the elastic body and having a cross-sectionally circular arc-shaped convex outer surface.

10. The base isolation supporting device according to any one of claims 1 to 9, wherein the support is adapted to be affixed to the base isolation support object, and the rotating body at the cross-sectionally circular arc-shaped convex outer surface is adapted to be brought into rollable contact with the flat surface of the foundation or the base, the center of curvature of the cross-sectionally circular arc-shaped convex outer surface of the rotating body being positioned eccentrically upwardly in the vertical direction with respect to the center of curvature of the cross-sectionally circular arc-shaped outer surface of the rotating body.

11. The base isolation supporting device according to any one of claims 1 to 9, wherein the support is adapted to be affixed to the foundation or the base, and the rotating body at the cross-sectionally circular arc-shaped convex outer surface is adapted to be brought into rollable contact with the flat surface of the base isolation support object, the center of curvature of the cross-sectionally circular arc-shaped convex outer surface of the rotating body being positioned eccentrically downwardly in the vertical direction with respect to the center of curvature of the cross-sectionally circular arc-shaped outer surface of the rotating body.

12. The base isolation supporting device according to any one of claims 1 to 11, further comprising a disengagement prevention mechanism for preventing the disengagement of the rotating body from the support by inhibiting the rotation of the rotating body more than a fixed degree as the rotating body collides against the disengagement prevention mechanism in the rotation of the rotating body about the center of curvature of the cross-sectionally circular arc-shaped outer surface of the support.

13. The base isolation supporting device according to claim 12, wherein the disengagement prevention mechanism has an enclosure body which is mounted to the support and encloses the rotating body, and the enclosure body has an inner surface which the rotating body contacts in the rotation of the rotating body more than a fixed degree about the center of curvature of the cross-sectionally circular arc-shaped outer surface of the support.

14. A base isolation supporting device comprising:

a support which is adapted to be affixed to one of a foundation or a base and a base isolation support object so as to receive a load of the base isolation support object to be supported on the foundation or the base, and which has a first cross-sectionally circular arc-shaped convex outer surface; and

a rotating body which has a cross-sectionally circular arc-shaped concave outer surface which is brought into slidable contact with the first cross-sectionally circular arc-shaped convex outer surface of the support, and which, at a second cross-sectionally circular arc-shaped convex outer surface thereof, is adapted to be brought into rollable contact with a flat surface of another one of the foundation or the base and the base isolation support object, so as to receive the load of the base isolation support object together with the support,

wherein the rotating body is rotatable with respect to the support about a center of curvature of the cross-sectionally circular arc-shaped concave outer surface of the rotating body, the second cross-sectionally circular arc-shaped convex outer surface of the rotating body has a greater radius of curvature than a radius of curvature of the cross-sectionally circular arc-shaped concave outer surface of the rotating body, and, in a stationary state, a center of curvature of the second cross-sectionally circular arc-shaped convex outer surface of the rotating body is positioned eccentrically with respect to the center of curvature of the cross-sectionally circular arc-shaped concave outer surface of the rotating body toward a side of one of the foundation or the base and the base isolation support object in a vertical direction.

15. The base isolation supporting device according to claim 14, wherein the first cross-sectionally circular arc-shaped convex outer surface of the support and the cross-sectionally circular arc-shaped concave outer surface of the rotating body are each constituted by a portion of a cylindrical surface.

16. The base isolation supporting device according to claim 14, wherein the first cross-sectionally circular arc-shaped convex outer surface of the support and the cross-sectionally circular arc-shaped concave outer surface of the rotating body are each constituted by a portion of a spherical surface.

17. The base isolation supporting device according to any one of claims 14 to 16, wherein the support includes a main body portion adapted to be affixed to one of the foundation or the base and the base isolation support object and a sliding portion formed integrally with the main body portion in such a manner as to be disposed between the main body portion and the rotating body and having the first cross-sectionally circular arc-shaped convex outer surface.

18. The base isolation supporting device according to any one of claims 14 to 17, wherein the first cross-sectionally circular arc-shaped convex outer surface of the support has an identical radius of curvature to the radius of curvature of the cross-sectionally circular arc-shaped concave outer surface of the rotating body.

19. The base isolation supporting device according to claim 18, wherein centers of curvature of the first cross-sectionally circular arc-shaped convex outer surface of the support and the cross-sectionally circular arc-shaped concave outer surface of the rotating body are positioned at an identical position.

20. The base isolation supporting device according to any one of claims 14 to 17, wherein the first cross-sectionally circular arc-shaped convex outer surface of the support has a smaller radius of curvature than the radius of curvature of the cross-sectionally circular arc-shaped concave outer surface of the rotating body.

21. The base isolation supporting device according to any one of claims 14 to 20, wherein, in the stationary state, the centers of curvature of the cross-sectionally circular arc-shaped concave outer surface and the second cross-sectionally circular arc-shaped convex outer surface of the rotating body are positioned on an identical vertical line.

22. The base isolation supporting device according to any one of claims 14 to 21, wherein, in the stationary state, the centers of curvature of the first cross-sectionally circular arc-shaped convex outer surface of the support and the cross-sectionally circular arc-shaped concave outer surface and the second cross-sectionally circular arc-shaped convex outer surface of the rotating body are positioned on an identical vertical line.

23. The base isolation supporting device according to any one of claims 14 to 22, wherein the rotating body includes a rigid body having a cross-sectionally circular arc-shaped concave outer surface and an elastic body secured to the rigid body and having the second cross-sectionally circular arc-shaped convex outer surface.

24. The base isolation supporting device according to any one of claims 14 to 23, wherein the rotating body includes an elastic body having a cross-sectionally circular arc-shaped concave outer surface and a rigid body secured to the elastic body and having the second cross-sectionally circular arc-shaped convex outer surface.

25. The base isolation supporting device according to any one of claims 14 to 24, wherein the support is adapted to be affixed to the base isolation support object, and the rotating body at the second cross-sectionally circular arc-shaped convex outer surface is adapted to be brought into rollable contact with the flat surface of the foundation or the base, the center of curvature of the second cross-sectionally circular arc-shaped convex outer surface of the rotating body being positioned eccentrically upwardly in the vertical direction with respect to the center of curvature of the cross-sectionally circular arc-shaped concave outer surface of the rotating body.

26. The base isolation supporting device according to any one of claims 14 to 25, wherein the support is adapted to be affixed to the foundation or the base, and the rotating body at the second cross-sectionally circular arc-shaped convex outer surface is adapted to be brought into rotatable contact with the flat surface of the base isolation support object, the center of curvature of the second cross-sectionally circular arc-shaped convex outer surface of the rotating body being positioned eccentrically downwardly in the vertical direction with respect to the center of curvature of the cross-sectionally circular arc-shaped concave outer surface of the rotating body.

27. The base isolation supporting device according to any one of claims 14 to 26, further comprising a disengagement prevention mechanism for preventing the disengagement of the rotating body from the support by inhibiting the rotation of the rotating body more than a fixed degree as the rotating body collides against the disengagement prevention mechanism in the rotation of the rotating body about the center of curvature of the cross-sectionally circular arc-shaped concave outer surface of the rotating body with respect to the support.

28. The base isolation supporting device according to any one of claim 27, wherein the disengagement prevention mechanism has an enclosure body which is mounted to the support and encloses the rotating body, and the enclosure body has an inner surface which the rotating body contacts in the rotation of the rotating body more than a fixed degree about the center of curvature of the cross-sectionally circular arc-shaped concave outer surface of the rotating body with respect to the support.

## FIG. 1

FIG. 2

FIG. 3

FIG. 4

FIG. 5

FIG. 6

FIG. 7

FIG. 8

FIG. 9

FIG. 10

FIG. 11

<table>
<tr><td colspan="2" align="center">**INTERNATIONAL SEARCH REPORT**</td><td colspan="2">International application No.<br><br>PCT/JP2014/006375</td></tr>
</table>

A. CLASSIFICATION OF SUBJECT MATTER
*F16F15/02*(2006.01)i, *E04H9/02*(2006.01)i

According to International Patent Classification (IPC) or to both national classification and IPC

B. FIELDS SEARCHED

Minimum documentation searched (classification system followed by classification symbols)
F16F15/02, E04H9/02

Documentation searched other than minimum documentation to the extent that such documents are included in the fields searched
Jitsuyo Shinan Koho           1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 7-310459 A  (Toyo Construction Co., Ltd.), 28 November 1995 (28.11.1995), paragraphs [0035] to [0056]; fig. 2 (Family: none) | 1-28 |
| Y | JP 3123586 U  (Wei Liang Lee), 20 July 2006 (20.07.2006), paragraph [0003]; fig. 1 to 4 & US 2006/0260222 A1 | 1-28 |
| Y | US 2002/0166301 A1  (Jae Kwan Kim), 14 November 2002 (14.11.2002), paragraph [0136]; fig. 22a to 22d & US 2004/0045236 A1    & US 2005/0172570 A1 & KR 10-2002-0004164 A   & KR 10-2002-0036574 A | 1-28 |

☒  Further documents are listed in the continuation of Box C.          ☐  See patent family annex.

| | |
|---|---|
| *  Special categories of cited documents:<br>"A"  document defining the general state of the art which is not considered    to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>06 March 2015 (06.03.15) | Date of mailing of the international search report<br>24 March 2015 (24.03.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

International application No.

PCT/JP2014/006375

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 54-52822 A  (Obayashi Corp.),<br>25 April 1979 (25.04.1979),<br>page 2, lower right column, lines 1 to 3; fig. 5<br>(Family: none) | 1-28 |
| Y | JP 3028407 U  (Saburo KANO),<br>03 September 1996 (03.09.1996),<br>paragraph [0005]; fig. 1 to 2<br>(Family: none) | 1-28 |
| Y | JP 2003-120748 A  (Tokkyokiki Corp.),<br>23 April 2003 (23.04.2003),<br>paragraphs [0091] to [0092]; fig. 9<br>& JP 2006-64184 A      & US 2003/0052247 A1<br>& KR 10-2003-0011688 A | 1-28 |
| Y | JP 2009-519387 A  (Maurer Söhne Engineering GmbH & Co. KG),<br>14 May 2009 (14.05.2009),<br>claims; fig. 3<br>& US 2009/0188179 A1    & WO 2007/073788 A2<br>& DE 102005060375 A1    & KR 10-2008-0097405 A | 1-28 |
| A | JP 5-99273 A  (Fujitsu Ltd.),<br>20 April 1993 (20.04.1993),<br>claims; fig. 1<br>& US 5310156 A1          & EP 536044 A1 | 1-28 |
| A | JP 9-158984 A  (Fujitsu Ltd.),<br>17 June 1997 (17.06.1997),<br>fig. 1 to 3<br>(Family: none) | 1-28 |

Form PCT/ISA/210 (continuation of second sheet) (July 2009)

**EP 3 239 557 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7310459 A